# EUROPEAN PATENT APPLICATION

(11) **EP 2 169 875 A1**
(43) Date of publication of application: **31.03.2010**
(21) Application number: 08165484.0
(22) Date of filing: 30.09.2008
(51) Int. Cl.: H04L 12/18

(54) **Event distribution in distributed systems**

(71) Applicant: Fujitsu Limited, Kawasaki-shi, Kanagawa 211-8588 (JP)
(72) Inventor: van den Berghe, Christopher Sven, Marlow, Buckinghamshire SL7 3LE (GB)
(74) Representative: Stebbing, Timothy Charles

(57) **Abstract**

In a large-scale, loosely-coupled computer system, distribution of events from producers (20) to consumers (11, 12, 13) takes place in successive phases each providing a higher level of detail than the previous stage but involving fewer recipients. The first phase (MUC1) is a notification that an event has occurred, with as little detail as possible of the actual event. This notification is designed to be small and so suitable for high-traffic multicasting. If a consumer (11, 12) decides that an event is of interest, then it makes a request (UNC4, UNC5) of the producer for more details of the event. The request for further information can take a number of forms, including a direct Unicast to the source of the event or a multicast to an "event distribution" address.

This then triggers a second phase (UNC11, UNC12) by which further details of the event are supplied to consumers which requested them. Additional phases may be involved before complete details of the event are provided to the interested consumers.

## Description

The present invention relates to the distribution of events ("interesting" occurrences) in large scale, loosely-coupled distributed computer systems.

Large scale distributed systems need to be flexible and adaptive. This leads to a requirement for very loose coupling between the members (nodes, such as servers, routers and clients) of a system. Loose coupling means that the members of a distributed system need a minimal amount of information about, or configuration in relation to, the other members of the system so that they operate autonomously, exchanging only information required to perform their tasks. Ideally members should be able to enter or leave the system, be upgraded, change configuration and so on without requiring changes to the operation of any other member.

Large scale distributed systems need to be able to distribute events to members of the system. "Events" may signify any change in state of the members, such as the above-mentioned examples of a member entering/leaving the system, being upgraded and so on. Events may also include phenomena related to links between members such as a failure of a communication path, overload state etc. Thus, there may be several distinct classes of event distributed in the system, and each class may involve events of various types. There may be large numbers of such events passing over a system, so the network bandwidth that is used to pass the events needs to be used efficiently. Also, the processing required by the recipients of events, as they accept an event notification and determine whether or not it is of interest to them, needs to be minimised.

Although many events can be handled by a single point to point communication (as they are intended for a single receiver) there are significant classes of event that may have multiple receivers. Examples of these classes are generally those involved with the monitoring of the system: logging, intrusion detection etc. Some event receivers need to receive events from a large number of sources, and managing lists of such sources and types of events can become challenging as the system size increases and as the system changes over time. From here on, members of the system which need to receive events are referred to as "consumers". Members acting as sources of events, in other words at which events occur, or which alert other members to the occurrence of an event, are called "producers". Where the context demands, the "consumer" may involve not only a node of the computer system, but also a human operator who may be required to take action in response to an event. However, some types or classes of event may be dealt with entirely within the system without human intervention.

When a distributed system is built so that it crosses over administrative boundaries, as happens with grids, then the way that various event types are handled may be different in different parts of the system. For example, the way that logs are created and also the particular events that are logged will change for different sites.

One current solution to the problem of event distribution involves the point-to-point passing of messages between the creator of the event and each member that is interested in the event (consumer). This can be achieved via the so-called publication/subscription model, in which a producer "publishes" information (which in general could be of any kind, whether or not related to the types of event referred to above) to predetermined "subscribers".

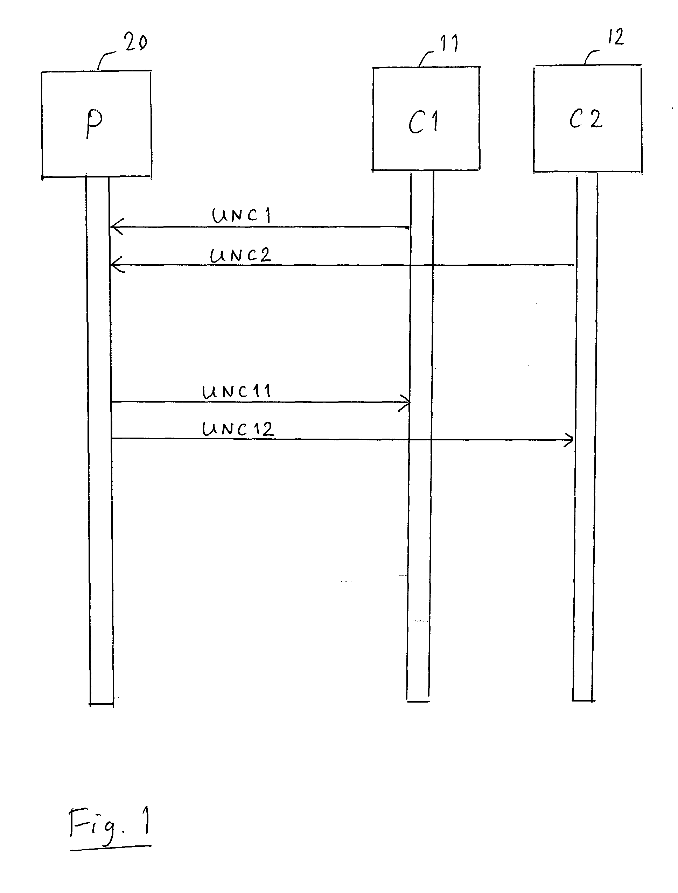

Figure 1 illustrates a scheme of this type in which consumers (C) 11 and 12 first subscribe to receive information from a publisher or producer (P) 20 by sending point-to-point (unicast) subscription messages UNC1, UNC2. At some later point in time (the vertical direction in Fig. 1 and later Figures of this type denotes the time axis) an event is notified by producer 20 to each of consumers 11, 12 by respective messages UNC11, UNC12.

Incidentally, in Figure 1 and in the later Figures, communications between nodes of a system are schematically shown by horizontal lines extending directly between the communicating parties. As will be understood by those skilled in the art, however, in practice such communications are likely to involve one or more intermediaries such as routers or switches. Such intermediaries make no difference to the basic messaging protocol, and thus are omitted for the sake of simplicity.

Under this model it is necessary for the event consumer 11 or 12 to register as a subscriber with the event producer 20, in order to be notified whenever a relevant event occurs. However, this results in a tight coupling between the producer and the consumer, as the consumer needs to know of the existence of all producers of the events that the consumer is interested in. This implies that there is some discovery mechanism for producers, which means a degree of centralisation. Each event consumer needs an individual copy of each event message, so the messages need to be repeated for each consumer. Subscriptions to events need to be managed by the consumer - stopped when no longer required, paused etc. - and monitored by the consumer. Should there be problems with the consumer, such as overloading or unexpected termination, this management may not be properly performed, leading to inconsistency in state between the producers and consumers and subsequent problems.
As a related known technique, many messaging systems have a Subscription Manager component, part of whose role is to know which message types or topics each client wants to receive. In this architecture, clients (receivers) need to actively manage their subscriptions to message topics by telling the Subscription Manager which messages they would like to receive, removing subscriptions when they are not longer wanted and, possibly periodically, re-subscribing to prevent timeouts. This system can be efficient but has a significant overhead and some inertia when clients want to change the topics subscribed to, which means that clients have difficulty adapting to quickly changing situations where their topics of interest may change.

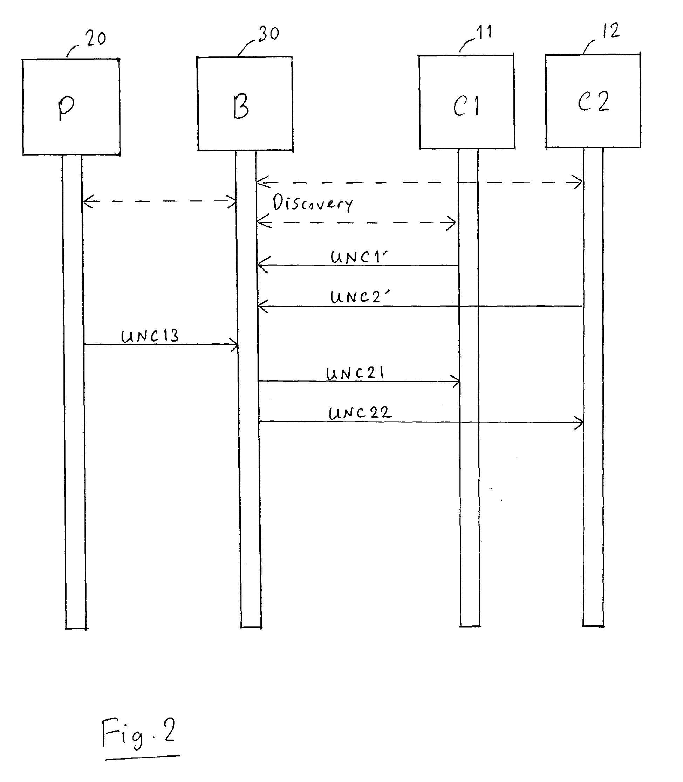

Some systems provide an event notification infrastructure that reduces the direct burden of subscription management and message duplication from the producers by decoupling producers from consumers through message brokers, as illustrated in Figure 2. Here, a broker (B) 30 is interposed in the chain of communication between producer 20 and consumers 11 and 12. Following an initial discovery/registration phase (indicated by dashed lines), the consumers 11 and 12 can know of the existence of the broker and subscribe to desired event types via unicast messages UNC1', UNC2'. Upon occurrence of an event at producer 20, the producer notifies the broker, for instance by a unicast message UNC13. The broker 30 then sends the required event notifications on behalf of the producer (UNC21 and UNC22). However, such brokers still need to be discovered by the consumers (as well as by producers) and will need to manage subscriptions and duplicated events.

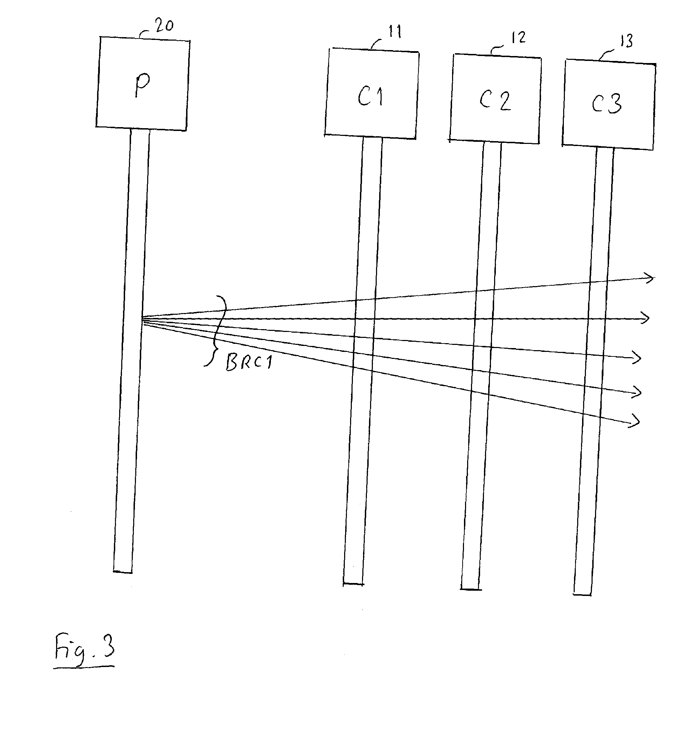

As an alternative to point-to-point distribution, broadcasting events throughout a system allows decoupling of producers from consumers but is impractically inefficient. This is depicted in simplified form in Fig. 3, showing the same information being sent from producer 20 collectively to all of consumers 11, 12 and 13 by a single broadcast message BRC1. Note that the broadcast is made to all consumers (i.e. potentially to all nodes of the network), regardless of whether or not each has any interest. In large systems there will be large numbers of events, and broadcasting of all of these is likely to lead to saturation of the networks. Also, event consumers will need to process every single broadcast event in order to determine which events are relevant - leading to large processing requirements on them.

Thus, there is a need to provide a mechanism for the efficient distribution of events in large scale loosely coupled distributed systems, such that the bandwidth required to distribute the events is minimised without requiring events to be passed through centralised points and not imposing a tight coupling between the members of the distributed system.

According to a first aspect of the present invention, there is provided an event distribution method in a distributed computer system, for notifying events of one or more different types and generated by at least one producer in the system to a plurality of consumers in the system, the method comprising steps of:
assigning a first multicast address in the system for event notifications;
the producer performing a first phase of event distribution by providing information giving at least an event notification via a multicast message using said first multicast address;
one or more of the consumers responding to the event notification with a request for further information; and
performing a second phase of event distribution comprising providing the one or more responding consumers with further information about the event.

Here, the "producer" is any node in the system at which an event is originated or detected. Each "consumer" is a node for which at least some types or classes of events are of interest, either in terms of operation of hardware or software of that node or for the actions of a human operator stationed at that node.

Preferably, the further information provided in the second phase is of greater amount than the information provided in the first phase. This allows the amount of data traffic involved in the first phase to be restricted. For example, the information provided in the first phase includes at least one of an event type, an event identifier, an address to which to respond for further information, and a time duration of availability of further information.

In one embodiment, the responding step involves a unicast message from each of the one or more responding consumers, to the producer. After that, the second phase may be conducted in a number of ways depending on the number of respondents. In one embodiment, the second phase sends a unicast message from the producer to each of the one or more consumers individually. Alternatively the second phase can take the form of a multicast message from the producer to the one or more consumers. In this case, the multicast message used in the second phase may employ a second multicast address different from the first multicast address.

Meanwhile, to distinguish events of different types in the first phase, the first phase of event notification preferably includes the event type as already mentioned, in other words it may encode the information provided with an indication of the event type. Alternatively, the assigning step may include assigning a plurality of multicast addresses each for an event notification of a respective type.

Whilst the method may include as few as two phases, further phases may be provided depending on the complexity of the event being notified. Thus, in another embodiment, a second responding step takes place, in which one or more of the consumers for whom the second phase was conducted respond to the producer with a request for still further information, and a step of the producer performing at least one further phase of event distribution by providing those consumers with still further information about the event, the information provided in the further phase(s) being of greater amount than the information provided in each preceding phase.

In addition to varying the amounts of information from one phase to the next, the method can adapt on the basis of past experience, by varying the amounts of information provided in each phase in accordance with the numbers of responses received to earlier event notifications of events of the same type.

Whilst the above methods have referred to a producer communicating directly with the consumers, in a further embodiment the system further comprises a broker acting as intermediary between the producer and the consumers. In this arrangement, the request for further information in the responding step is directed to the broker, and the second phase is conducted by the broker. There may be a plurality of said brokers, in which case the first multicast address allows the producer to multicast the event notification to the plurality of brokers, and the request for further information may be unicast or made by the consumers to a further multicast address monitored by the brokers.

A variation of the above method introduces a known peer-to-peer technique to spread the distribution load, wherein the second or any further phase comprises a consumer, which has already received the information to be provided in that phase, communicating this information to other ones of the requesting consumers which do not yet have this information.

According to a second aspect of the invention, there is provided an event distribution method in a database system in which a database is distributed over a plurality of database servers, and requests for accessing the database are received by a front-end server coupled to the database servers, the method comprising steps of:
assigning a multicast address in the system for access requests to the database;
the front-end server notifying the database servers of an access request via a multicast message using said multicast address;
one or more of the database servers responding to the notification of an access request with a request for further information; and
the front-end server providing the one or more responding database servers with further information about the access request.

According to a third aspect of the invention, there is provided an event distribution method in a software program comprising a plurality of code blocks, for notifying events yielded by execution of one of the code blocks acting as a producer, to a plurality of the other code blocks acting as consumers, the method comprising steps of:
assigning a multicast address in the software program for event notifications;
the producer performing a first phase of event distribution by providing information giving at least an event notification via a multicast message using said multicast address;
one or more of the consumers responding to the event notification with a request for further information; and
performing a second phase of event distribution comprising providing the one or more responding consumers with further information about the event.

### Reference is made, by way of example only, to the accompanying drawings in which:

Figure 1 illustrates event distribution by passing of messages between a producer and consumers in a known unicast messaging technique;
Figure 2 illustrates event distribution performed via a broker;
Figure 3 illustrates event distribution by known broadcast messaging;
Figure 4 illustrates the use of multicast for event distribution from a producer to consumers, as the principle underlying the present invention;
Figure 5 is a flowchart of the basic method of split-phase distribution according to the present invention;
Figure 6 illustrates a split-phase event distribution scheme in accordance with a first embodiment of the present invention;
Figure 7 illustrates a split-phase event distribution scheme in accordance with a second embodiment of the present invention;
Figure 8 illustrates a split-phase event distribution scheme in accordance with a third embodiment of the present invention;
Figure 9 is a schematic block diagram of a distributed database system; and
Figure 10 illustrates passing of messages between a user, web server and database servers in the system of Fig. 9, in a further embodiment of the present invention.

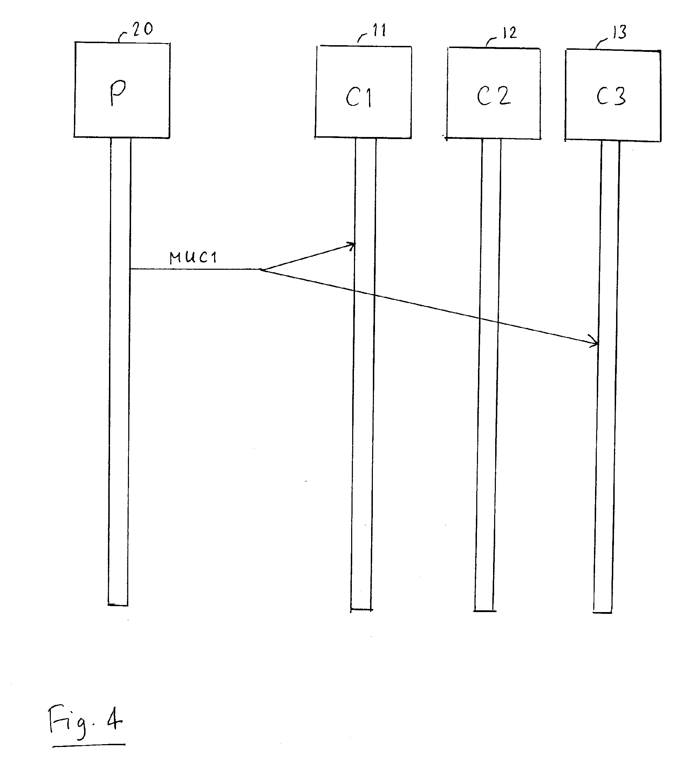

Embodiments of the present invention will now be described with reference to Figures 4 to 10 of the drawings, after explaining the underlying principle.

In the introduction, the drawbacks of using either Point-to-Point or Broadcast techniques for event distribution were outlined. Point-to-Point and Broadcast are not the only possible forms of distribution, however. Internet Protocol (IP) is commonly used for exchanges of messages in loosely-coupled systems, and IP supports in total four forms of message addressing:
- Unicast: This is point-to-point messaging as already referred to, and the most common form of IP addressing. If the same message is intended for multiple recipients it must be sent multiple times, explicitly to each of them.
- Broadcast: It is possible to send a message to all reachable destinations using an IP broadcast. To avoid flooding the network, routers may act to limit the reachable destinations from the sender.
- Multicast: A multicast address is associated with a group of interested receivers. The sender sends a single message from its unicast address to a multicast address. The network's routers take care of making copies and sending them to all receivers who have registered their interest in data sent to the multicast address.
- Anycast: Another one-to-many routing address where messages are not transmitted to all receivers, but only the one the router decides is the "closest" in the network. Anycast is useful for balancing data loads and is used in DNS (Domain Name System) and UDP (User Datagram Protocol).

Embodiments of the present invention use IP Multicast addressing as the underlying principle for at least part (at least one stage or "phase") of event distribution in a distributed computer system. Currently, IP Multicast is commonly used to deliver one-way streaming media (e.g. high-speed video over cable) to groups of receivers, for some audio and video conferencing and also for distributing files (OS images) in internal networks. All these uses, as well as this invention, use multicast to minimise the use of network bandwidth when a single message needs to be sent to multiple receivers.

Embodiments of the present invention achieve flexibility in the distribution of events while being efficient in the use of bandwidth and processing through the combination of IP multicast addressing and new protocols to manage the event distribution.

We assume that we have a system that has a large number of independent components that need to communicate events to each other. There are significant numbers of event producers and also significant numbers of event consumers. The event producers and consumers do not necessarily have a strong connection with each other, that is the event producers do not necessarily know who is interested in their events or which type, how many are interested or even the addresses of interested consumers. Symmetrically, the consumers do not know about the producers.

A first feature of the present invention is to use IP multicast to allow the producers and consumers to "meet" so that events can be communicated, as illustrated conceptually in Figure 4. Here, the producer (P) 20 sends an event notification to both of consumers 11 and 13 (C1 and C2) by a single multicast message MUC1. Note that the difference from Fig. 3 is that the notification is no longer indiscriminate: consumer 12 does not receive the notification. In a particular distributed computer system, a multicast address is created that is used for event notifications. Producer and consumer instances are told to use this address, but have, and need, no further information about each other. This leads to a significant decoupling and thus an increase in the robustness of the overall system.

Events can be of different types and consumers are usually interested in just a few of the types of message that can be created in a complex system. Consequently, use of only a single address for all event types would require consumers to process a large number of uninteresting events. To minimise the processing, the message type is encoded into the initial message (first-phase notification) in a simple form that enables efficient decoding. Alternatively, if the message types can be easily partitioned into distinct categories, different addresses can be assigned to different message types or classes.

Events can contain a lot of information and thus to provide complete notification of an event can involve a large amount of data. Therefore, multicasting a large number of these events would use a lot of the available bandwidth on an installation's network - at the expense of other communications requirements. Processing large event structures also can have a large computational cost. To reduce the bandwidth requirements and the computational cost, the present invention splits event notification into more than one phase, each phase having increasing message size, but with the protocols designed so that the number of message recipients is reduced and so reduces the overall bandwidth and processing requirements. In other words, distribution of events takes place in successive stages each being sent to an audience of consumers that are known to be interested in the events and each providing a higher level of detail than the previous stage but involving fewer recipients.

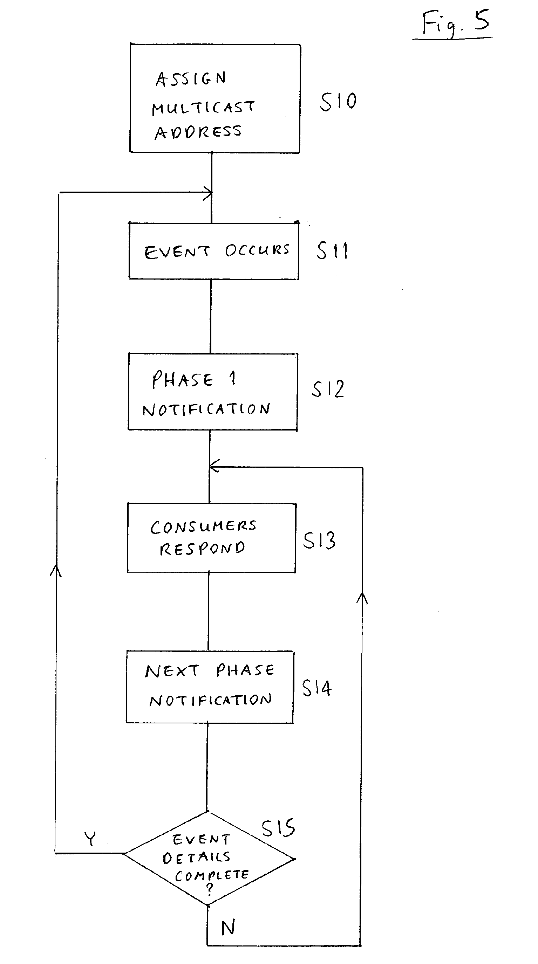

This process is shown in the flowchart of Figure 5. In a first step S10, one or more multicast addresses are assigned (possibly, one for each event type as just mentioned). Then in S11, an event occurs which is capable of being notified to consumers in the system. This automatically triggers the first phase notification of S12.

The first phase is a notification that an event has occurred, with as little detail as possible of the actual event. This notification is designed to be small and so suitable for high-traffic multicasting, and it is also easy to process so that consumers can efficiently determine whether an event is of interest. The contents of the first phase notification may include a simple indicator of the class and/or type of event that has occurred (preferably near the head of the notification, allowing the event type to be easily distinguished so that only notifications of event types of interest to a given consumer are processed further), the address where complete details of the event can be obtained and/or an event identifier. Further information can be added, such as a lifetime after which the event will no longer be available from the source.

Note that this 1st phase notification differs from conventional multicast messages such as multicast session announcements, which assume that all listeners are interested in all of the message and so send all the information in the message. By contrast, the invention assumes that most listeners (potential consumers) are not interested, and so sends the minimum possible information in the first phase, preferably including an event (or message) type in a simple form that enables efficient decoding.

If a consumer decides that an event is of interest, then it makes a request of the producer for more details of the event (S13). The request for further information can take a number of forms, such as a direct Unicast to the source of the event or a multicast to an "event distribution" address. In the event that no consumer responds to the first-phase notification in S13, then of course there may be no need for the second (or any further) phase to take place. Conversely, receipt of at least one response by the producer (or by a broker entrusted to perform distribution in the second phase - see below) may act to trigger the next phase in S14. In its first iteration, this is the second phase.

In the simplest implementation, the second phase reply will be over IP Unicast to each individual respondent, and so more efficient than a multicast of the full event, at least for relatively few respondents. Also, at its simplest, complete details of the event can be provided in the second phase. Thus, if in step S15 the details are complete (S15, "Y"), there is no need to continue the process. Flow returns to await occurrence of a next event in S11.

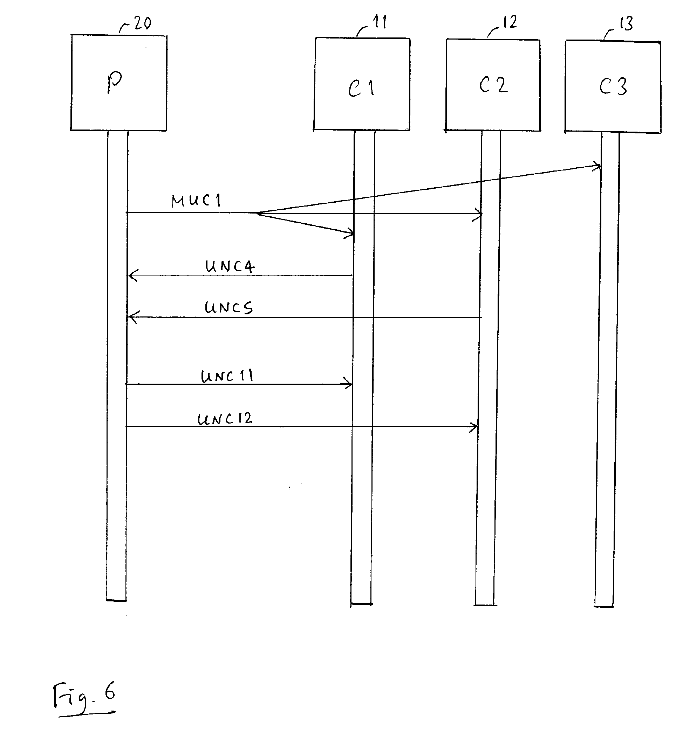

The messaging involved in such a simple two-phase procedure is illustrated in Figure 6. Following the multicast message MUC1 by which the first-phase notification is made, and which in this example is received by all three consumers 11, 12 and 13, the producer 20 receives responses UNC4 and UNC5 from two of the producers 11 and 12. This prompts a second phase in which (in this example) unicasts UNC11 and UNC12 are sent by producer 20 to complete the event notification to the interested consumers.

"Larger" events may be appropriately divided into more than two phases. The producer (or broker, if any) may decide that there is too much information to provide complete details in the second phase, perhaps on the basis that most consumers would not require such a level of detail. If after the second phase the event details are not yet complete (or in other words there remains information about the event which has yet to be distributed: S15, "N"), then flow returns to step S13 to allow a further response from the consumers. This then leads to a third phase notification, which may in turn provoke responses leading to possibly a fourth phase, and so on. At each stage, consumers may decide that they have sufficient information about the event (or that the event is no longer of interest in the light of information already received). In that case they do not participate further. Thus, after each phase the number of consumers still involved will tend to decrease, reducing the bandwidth required even if the amounts of data involved increase from one phase to the next. Here, the decisions on how and whether to divide into more than two phases, and on when a consumer has received sufficient data, may be made automatically, for example by referring to a predetermined table of event types. Alternatively, such decisions could be entrusted to a human operator when required.

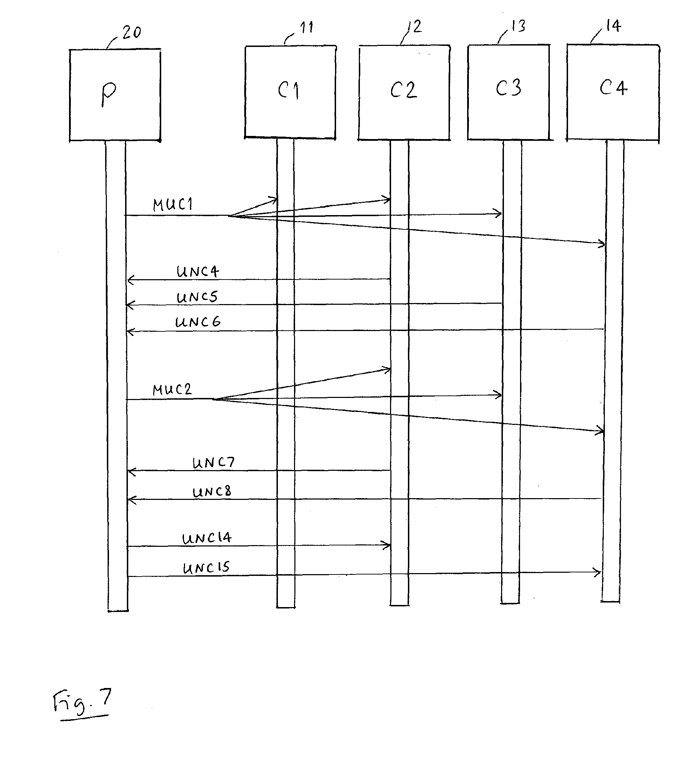

Figure 7 illustrates a three-phase event distribution, with the first phase handled by a multicast MUC1 as before, prompting responses UNC4, UNC5 and UNC6 from three consumers 12, 13 and 14. The second phase, in this example, is a second multicast MUC2. This time, only two consumers 12 and 14 remain interested in receiving further information; this is achieved via unicasts UNC14 and UNC15.

If a large number of consumers request event details from a producer, then the producer may become overloaded and unable to perform its proper task. There are three variations of the idea that can cope with this; these can be used in combination or by themselves.

Firstly, if the event producer feels that a particular event is popular (e.g. if it receives a large number of requests in a certain time) it multicasts the complete event rather than just the notification. This could be to the same address or to a different address that is dedicated to longer messages.

Secondly, an installation (distributed system) can include one or more event registry components whose function is to store all events for retrieval by interested consumers. In this case the registry would respond to a simple event notification by collecting the event details and sending an update simple event notification to say that the registry is the new event source.

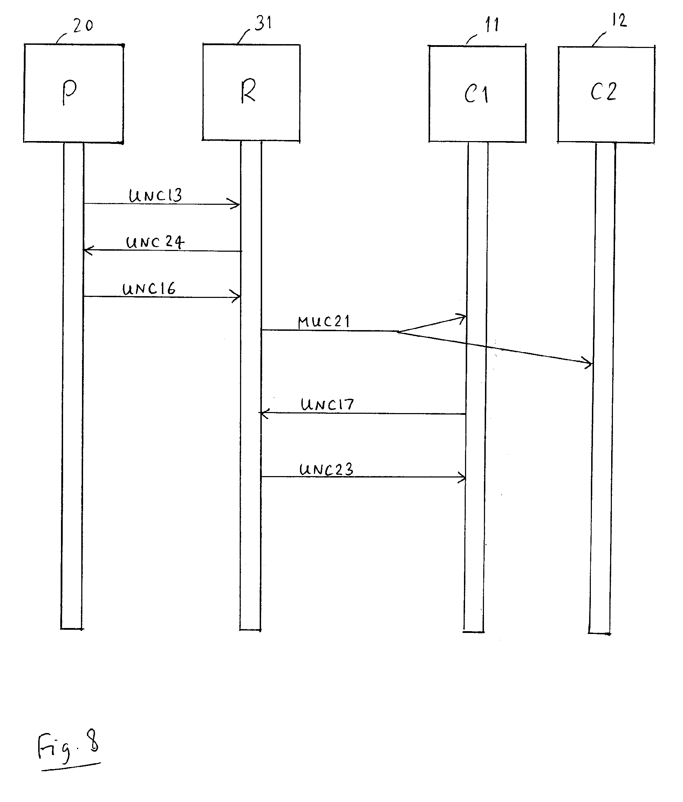

A simplified version of such an arrangement, having only a single Registry (R) 31, is shown in Fig. 8. With a single Registry, a unicast UNC13 suffices for the producer 20 to inform the Registry 31 of an event having occurred. The registry 31 requests details (UNC24) in response to which the producer provides all the relevant information to the Registry (UNC16). The registry then handles the split-phase notification to the consumers 11 and 12, for example using a mixture of multicast (MUC21) and unicast (UNC23) messages in a similar manner to Fig. 6. Again, with only a single registry 31 a unicast UNC17 is appropriate for the response from an interested consumer 11. When multiple registries are provided, the above scheme is modified by assigning two types of multicast address, one for registries acting as consumers (to which producers write) and the other for registries acting as producers (to which the actual consumers subscribe). Thus, for example, UNC13 in Fig. 8 would be replaced by a multicast to all registries.

Thirdly, a peer-to-peer distribution system can be created whereby members who have the full event details communicate them to members who still require them.

To provide a more concrete example of the split-phase distribution process, consider a large data centre with thousands of machines, disks, routers etc hosting lots of different applications, each application having thousands of instances running on different machines over the datacentre. The datacentre management team need to monitor what is happening to ensure service level guarantees, they also need to log significant occurrences for later auditing. In addition, they run load balancing software to ensure that no machine is overloaded and have a monitor for security. Suppose that the administrators want to shut down a machine and the application instances running on that machine need to be migrated to another machine (which means that they will have to shut down, move their data to the other machine and then be restarted). In this situation, the first-phase notification might simply contain the information "application instance X at a.b.c.d shutting down soon". This information is multicast and picked up by the system level (SL) monitor, logger and load balancer (but ignored by the security monitor).

The message is sufficient for the logger but the load balancer and SL monitor need to know more details (for example, the reason for the shut down and the expected time for the machine to be back up). The logger does nothing else; in other words, it makes no response to the first-phase notification. On the other hand, the SL monitor and balancer contact the machine being shut down (or more precisely the application instance running on that machine) for more information. If the load balancer is itself composed of many instances, then each instance will make the request for more information at which point the application instance can change its delivery strategy and multicast the whole information.

Thus, notifications can contain dynamically varying amounts of information. For example, if a simple notification has proved "popular" (received many responses to a first-phase notification) in the recent past, then a producer could include more details in the first-phase notification the next time a similar event is notified. This could allow, for example, the overall number of phases to be reduced.

Note that in the more complex extensions, the notification has become a notification that some information has become available at a location. This information could be new or it could be a copy of previously announced information.

As will be apparent from the above description, the present invention is quite distinct from the known publication/subscription model where a publisher announces topics and a subscriber asks for notifications on some of the topics, perhaps filtered by other values. Under the publication/subscription model, the burden of deciding which events to send is on the publisher (or publisher proxies closer to the subscribers), and the subscriber expects nothing except the events subscribed to. The present invention inverts this model by having all events (or at least, a first-phase notification thereof) distributed to all subscribers and the subscriber filters locally. To reduce bandwidth requirements the first-phase notification is kept small. This allows each consumer to decide, in response to each event as they occur, whether to request more details.

To look at it another way, the standard publication/subscription model provides "static" subscriptions (over many events) while the present invention allows "dynamic" subscriptions (on a per event basis). The present invention can also be viewed as doing away with subscriptions (defined as an expressed desire to receive event of a definite type) completely, replacing them with "eavesdroppers" (potential consumers) who listen to everything that is going on (all event types) and really pay attention when something interesting to them (e.g. a specific event type) happens.

Having described an embodiment of the present invention in relation to general event distribution in a distributed computer system, some more particular or alternative applications of the invention will now be outlined.

### (i) Presence Networks

The "events" referred to so far generally relate to operation of hardware or software of a computer system, but this is not essential. Events may include, for example, the state of users of the system. Presence Networks, e.g. aspects of Instant Messaging systems, need to pass event notifications to some, but not all of, the other members of the network such as when a "friend" signs on or off. The present invention can be used to decentralise these notifications.

### (ii) Monitoring

Monitoring applications fall naturally into the scope of split phase multicast event distribution.

One specialised application of a monitoring architecture is intrusion detection where security events, such as failed or denied access to resources, are passed to a monitoring system that correlate these events across the distributed system to detect and respond to coordinated attempts to gain access to the system.

By contrast to known subscription systems, this invention allows system monitors (consumers) to be much more responsive. There is no need to explicitly subscribe to topics (other than the very general ones as expressed by connecting to a particular multicast address). Instead clients listen with very low overhead to all messages and choose to focus on topics of current interest. As these "subscriptions" are processed locally, changing a topic is simple and fast.

For example, consider an application that keeps the load on a system below a threshold by redirecting any new requests to alternative resources when the threshold is exceeded. Below the threshold, the application only needs to receive event about the threshold being reached, but after this event has been received it needs details of all events relating to requests for new work. Then, once the load has reduced to below the threshold, it needs to unsubscribe from the new work request events. With the known subscription-based model, this needs a number of explicit subscribes and unsubscribes (when there are many resources being monitored this is a considerable load). With the invention, the process of "switching focus" becomes much easier.

### (iii) Distributed databases

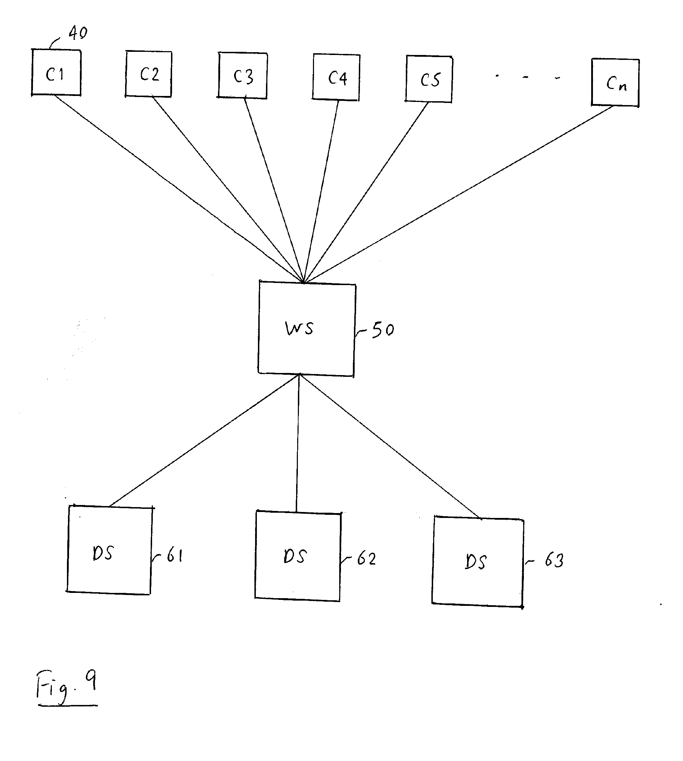

Large-scale web sites use distributed databases to manage their loads. An example of a database system configuration is shown in Figure 9, in which any of a number of users (C1, C2, C3....Cn) 40 send queries to a web server (WS) 50 acting as the front end of the database system. This then routes the query as appropriate to one of the database servers (DS) 61, 62 or 63. These servers should share no information; they are both physically and logically separate. The actual location of data is dynamic, as server loads and capacities are rebalanced during operation. Generally, a query for an item of data must first find where it is being held by consulting a central registry (not shown). This central index can be a bottleneck, a single failure point and needs to be maintained up to date. All of these properties are detrimental to the overall system performance.

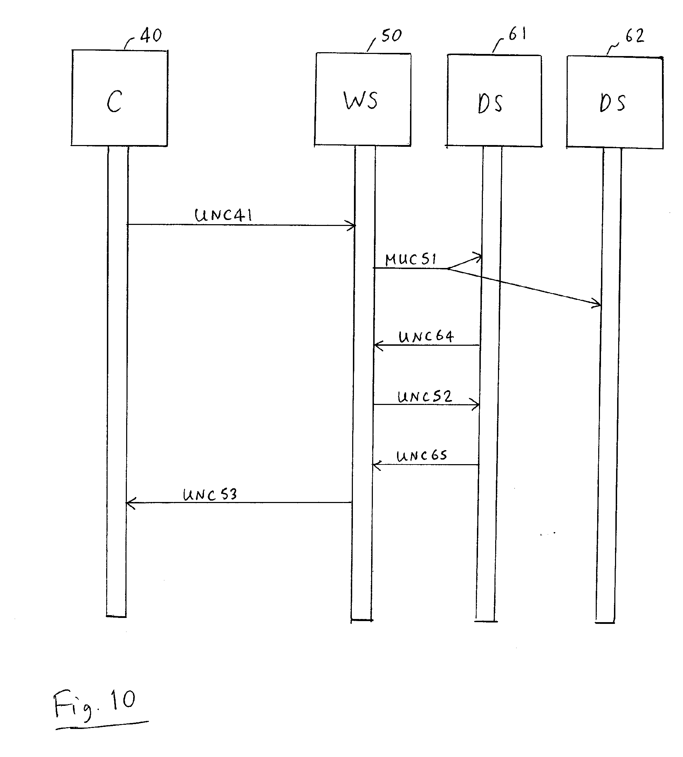

Split phase multicast event distribution can replace this central index. Using the same basic configuration as shown in Fig. 9 as an example, the database servers 61, 62, 63 listen for multicast events. As shown in Figure 10, when the web server 50 (acting as the producer in this scenario) receives a request requiring a database access (unicast UNC41 from user 40), it multicasts (MUC51) an event summary (first-phase notification) to some or all of the database servers, in this example to servers 61 and 62. The database server 61 (consumer) holding the relevant records responds, firstly with a request UNC64 for the full query and then, following receipt of the full query for example via a unicast UNC52 from the web server, with the query results (UNC65). These are then forwarded from web server 50 to user 40 in unicast UNC53.

### (iv) Aspect oriented programming

Aspect oriented programming (AOP) seeks to separate crosscutting concerns (code added to a program that is not directly concerned with the business of the project, for example security or logging) from the rest of a program. AOP languages define "join points" when a program reaches a point where a crosscutting concern may be applicable. In AOP languages join points result in a call to dynamically loaded code that handles the crosscutting concern. Join points can also result in events passed to a split phase multicast event distribution system where the handling code listens to the multicasts.

Thus, in this scenario, respective parts of the program code can be considered to create producers and consumers who (particularly in a large-scale application) may not be aware of, or care about, each other's existence. Just as in a distributed computer system, the producers and consumers connect via a common address over which lots of messages pass, most of which are not of interest to a given consumer. Note that this principle can be applied regardless of whether or not the various parts of the program code are hosted on different machines.

To summarise, embodiments of the present invention provide the following features:
Notification and distribution of arbitrary events using multicast.
   - Different addresses may be used for different event types or classes
Event notification has several phases
   - Each phase increases the amount of information transferred
   - Each phase is more directed to interested parties
The distribution of information during the phases can be handled in different ways
   - Central registry
   - Point to point
   - Peer to peer
Addresses can be used in a number of ways
   - Different addresses for different event types or classes
   - Different addresses for different phases
Event producers can dynamically adapt message size and phases according to "interest" in previous messages.

Advantages brought by the present invention include the following. Firstly, the present invention facilitates a decoupling of the members of the distributed computer system from each other, which in turn leads to a simplification in the management of such systems and to an increase in their robustness. Secondly, having an efficient decoupled messaging system leads to distributed systems that interact more effectively by sharing more information.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An event distribution method in a distributed computer system, for notifying events of one or more different types and generated by at least one producer in the system to a plurality of consumers in the system, the method comprising steps of:
assigning a first multicast address in the system for event notifications;
the producer performing a first phase of event distribution by providing information giving at least an event notification via a multicast message using said first multicast address;
one or more of the consumers responding to the event notification with a request for further information; and
performing a second phase of event distribution comprising providing the one or more responding consumers with further information about the event.

2. The event distribution method according to claim 1 wherein the further information provided in the second phase is of greater amount than the information provided in the first phase.

3. The event distribution method according to claim 1 or 2 wherein the information provided in the first phase includes at least one of an event type, an event identifier, an address to which to respond for further information, and a time duration of availability of further information..

4. The event distribution method according to claim 1, 2 or 3 wherein the responding step involves a unicast message from each of the one or more consumers to the producer.

5. The event distribution method according to any preceding claim wherein the second phase involves a unicast message from the producer to each of the one or more consumers respectively.

6. The event distribution method according to claim any of claims 1 to 4 wherein the second phase involves a multicast message from the producer to the one or more consumers.

7. The event distribution method according to claim 6 wherein the multicast message used in the second phase employs a second multicast address different from the first multicast address.

8. The event distribution method according to any preceding claim wherein the assigning step includes assigning a plurality of multicast addresses each for an event notification of a respective type or class.

9. The event distribution method according to any preceding claim further comprising a second responding step in which one or more of the consumers for whom the second phase was conducted respond to the producer with a request for still further information, and a step of the producer performing at least one further phase of event distribution by providing those consumers with still further information about the event, the information provided in the or each further phase being of greater amount than the information provided in each preceding phase.

10. The event distribution method according to any preceding claim further comprising a step of varying the amounts of information provided in each phase in accordance with the numbers of responses received to earlier event notifications of events of the same type.

11. The event distribution method according to any preceding claim wherein the system further comprises a broker acting as intermediaries between the producer and the consumers, said request for further information in the responding step being directed to the broker, and the second phase being conducted by the broker.

12. The event distribution method according to claim 11 wherein there are a plurality of said brokers, said first multicast address allowing the producer to send the event notification to the plurality of brokers, and said request for further information is made to a further multicast address monitored by the brokers.

13. The event distribution method according to any preceding claim wherein the second or any further phase comprises a consumer, which has already received the information to be provided in that phase, communicating this information to other ones of the requesting consumers which do not yet have this information.

14. An event distribution method in a database system in which a database is distributed over a plurality of database servers, and requests for accessing the database are received by a front-end server coupled to the database servers, the method comprising steps of:
assigning a multicast address in the system for access requests to the database;
the front-end server notifying the database servers of an access request via a multicast message using said multicast address;
one or more of the database servers responding to the notification of an access request with a request for further information; and
the front-end server providing the one or more responding database servers with further information about the access request.

15. An event distribution method in a software program comprising a plurality of code blocks, for notifying events yielded by execution of one of the code blocks acting as a producer, to a plurality of the other code blocks acting as consumers, the method comprising steps of:
assigning a multicast address in the software program for event notifications;
the producer performing a first phase of event distribution by providing information giving at least an event notification via a multicast message using said multicast address;
one or more of the consumers responding to the event notification with a request for further information; and
performing a second phase of event distribution comprising providing the one or more responding consumers with further information about the event.
